# EUROPEAN PATENT APPLICATION

(11) **EP 2 091 238 A1**
(43) Date of publication of application: **19.08.2009**
(21) Application number: 09152955.2
(22) Date of filing: 16.02.2009
(51) Int. Cl.: H04N 5/33

(54) **Use and creation of thermographic images for artistic purposes**

(30) Priority: 18.02.2008 IT LE20080007
(71) Applicant: De Donno, Angela, 73100 Lecce (IT)
(72) Inventor: De Donno, Angela, 73100 Lecce (IT)
(74) Representative: Mittler, Enrico

(57) **Abstract**

The invention consists in using thermographic images for artistic and decorative purposes. Duplicates of thermographic images to be printed on every surface intended to be decorated are obtained by means of digital technologies.

## Description

The present invention relates to a process for making commercial and artistic products with thermographic images or thermographies.

At present, thermographic images are exclusively used for technical purposes and especially for sorting out problems in the electrical, mechanical, and hydraulic maintenance fields, in the construction field and in the medical field (diagnostics).

It is the object of the present invention to make a process allowing the use of thermographic images for artistic applications (paintings, printings, photographic images, advertising sign-plates, printing on fabrics), decorative fittings (interior design, furniture objects, clothing, graphical products, desktop wallpapers for PCs and mobile telephones) and therapeutic applications (chromotherapy).

In accordance with the invention, such an object is achieved by means of a process for making artistic thermographic images, **characterised in that** it comprises the steps of:
- acquiring thermographic images by means of a thermocamera
- transferring the images from the thermocamera to a computer
- processing the images in a computer
- duplicating the processed images by means of high quality digital printers on a predetermined support.

It is advantageously possible to manually decorate the printed, computer-processed image in order to create artistic or decorative works.

These and other features of the present invention will be made more apparent from the following detailed description of an exemplary practical embodiment thereof, illustrated by way of non-limitative example in the accompanying drawings, in which:

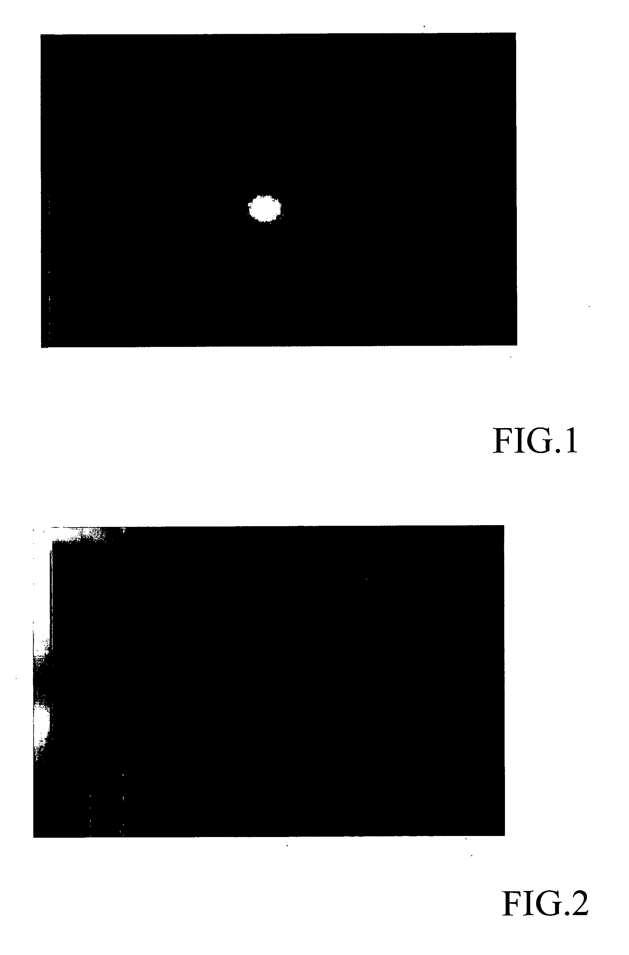

figure 1 shows a thermographic image obtained by means of the process according to the present invention;
figure 2 shows a second thermographic image obtained by means of the process according to the present invention.

By using a thermocamera, thermographic images of different colouring and colour gradation are obtained, depending on the various infrared radiation emitted by each body.

The collected digital images are transferred by means of a software on a computer and digitally processed, up to obtain the desired artistic or decorative result.

The product thus obtained is then printed on any predetermined surface by means of high quality digital printers, and may also be reproduced on an industrial scale.

It should be noted that the term "computer" means any type of data processing device herein, possibly also included in the thermocamera itself and able to control the printers.

The acquisition of images by means of the thermocamera may in turn be performed by means of both photographic snapshots and a film recorded by the thermocamera itself.

Such a technique allows to simply and effectively obtain a product containing an extraordinary variety of colourings and an extraordinary gradation thereof. The results of this process represent images unique of their kind and impossible to be obtained in other ways.

In case of artistic or decorative use of the images, they are printed and then manually decorated to obtain the desired result.

## Claims

1. A process for making artistic thermographic images, **characterised in that** it comprises the steps of:
- acquiring thermographic images by means of a thermocamera
- transferring the images from the thermocamera to a computer
- processing the images in a computer
- duplicating the processed images by means of high quality, digital printers on a predetermined support.

2. A process according to claim 1, **characterised in that** it comprises manually decorating the printed computer-processed images in order to create artistic or decorative works.

3. A process according to claim 1, **characterised in that** the acquisition of thermographic images is performed by means of photographic snapshots.

4. A process according to claim 1, **characterised in that** the acquisition of thermographic images occurs by means of a film recorded by the thermocamera.
